# EUROPÄISCHE PATENTSCHRIFT

(11) **EP 0 900 004 B1**
(45) Veröffentlichungstag und Bekanntmachung des Hinweises auf die Patenterteilung: **09.04.2003**
(21) Anmeldenummer: 98905332.7
(22) Anmeldetag: 22.01.1998
(51) Int. Cl.: A01M 21/04

(54) **VERFAHREN UND VORRICHTUNG ZUM BESEITIGEN VON WILDKRAUT UND ZUM REINIGEN VON OBERFLÄCHEN**
PROCESS AND DEVICE FOR ELIMINATING WEEDS AND CLEANING SURFACES
PROCEDE ET DISPOSITIF POUR ELIMINER DES MAUVAISES HERBES ET POUR NETTOYER DES SURFACES

(30) Priorität: 28.01.1997 DE 19704971; 11.07.1997 DE 19729683
(43) Veröffentlichungstag der Anmeldung: 10.03.1999
(73) Patentinhaber: Werner Görgens Consulting & Trading, 51107 Köln (DE)
(72) Erfinder: GÖRGENS, Werner, D-51107 Köln (DE)
(74) Vertreter: Berkenfeld, Helmut, Dipl.-Ing.
(86) Internationale Anmeldenummer: EP9800336
(87) Internationale Veröffentlichungsnummer: WO98032332

(56) Entgegenhaltungen:
- WO-A-94/26102
- WO-A-95/16341
- DE-A- 3 639 705
- DE-U- 8 911 869
- DE-U- 29 702 238
- FR-A- 1 187 477
- US-A- 5 366 154

## Beschreibung

Die Erfindung betrifft ein Verfahren und eine Vorrichtung zum Beseitigen von Wildkraut und Vernichten seiner Samen mit Besprühen des Wildkrautes und der Oberfläche des von ihm bewachsenen Bodens mit aus mindestens einer Düse mit einer Temperatur von mindestens 115°C und einem Druck von mindestens 7 bar austretendem Heißdampf. Das erfindungsgemäße Verfahren und die erfindungsgemäße Vorrichtung eignen sich weiter zum Reinigen von Oberflächen.

Bekannt ist eine Vorrichtung (DE-Gbm 89 11 869) zum Beseitigen von Wildkraut mit einem Fahrgestell mit einem an diesem in einer vorgegebenen Höhe über dem Boden gehaltenen Rahmen mit einem an diesem gehaltenen und auf eine metallische Reflexionsfläche gerichteten Gasbrenner. Die Reflexionsfläche wird von dem Gasbrenner bis auf knapp 1000°C erhitzt. Die Reflexionsfläche reflektiert die Wärme in Form von Infrarotstrahlung nach unten in Richtung auf den Boden und die in diesem wachsenden Wildkräuter. Durch die Infrarotstrahlung werden die Pflanzen bis auf etwa maximal 70° erhitzt. Die Wärme zerstört die Proteine in den Pflanzenzellen. Die Pflanzen verwelken. Die Zerstörung der Proteine in den Pflanzenzellen läßt sich nicht sofort mit dem Auge erkennen. Bis zum Verwelken der Wildkräuter und deren Verfallen können einige Tage vergehen. Diese bis zum Erkennen des Ergebnisses verstreichende Zeit ändert nichts an der Tatsache, daß die Wildkräuter wirksam zerstört und damit an einem weiteren Wachstum gehindert sind. Es kommt jedoch vor, daß mit der bekannten Vorrichtung arbeitende Hilfskräfte diesen zeitlichen Ablauf nicht erkennen. Sie betrachten die Wildkräuter vor und nach der Behandlung mit der bekannten Vorrichtung und erkennen keinen wesentlichen Unterschied in ihrem Aussehen. Deshalb stellen sie den oder die Gasbrenner auf eine höhere Leistung ein. Dies kann zu einem wirklichen Verbrennen der Wildkräuter führen. Es stellt aber eine Energieverschwendung dar. Die verbrannten oder angesengten Wildkräuter verbleiben mit ihren Wurzeln im Boden. Dies führt dann dazu, daß sie an Ort und Stelle verfallen und den Boden düngen, was zu einem neuen und kräftigen Bewuchs mit jungen Wildkräutern führt.

Ein wirksamer Betrieb der bekannten Vorrichtung verlangt trockenes Wetter. Bei feuchtem Wetter oder sogar Regen wird die durch die Infrarotstrahlung an der Oberfläche der Wildkräuter erzeugte Wärme durch die Verdunstungskälte so weit aufgebraucht, daß die zum Zerstören der Proteine erforderliche Temperatur von etwa 70°C nicht erreicht wird. Bei einem Einsatz der bekannten Vorrichtung in Gärten oder Parks, bei denen dieser Einsatz frühestens am Tag davor geplant wird, stellen ein solcher Regen und die sich daraus ergebende Nichtanwendbarkeit der bekannten Vorrichtung keine Schwierigkeit dar. Die Deutsche Bahn verwendet jedoch aus mehreren Wagen bestehende Arbeitszüge zum Beseitigen des Wildkrauts von den Schotterbetten und den angrenzenden Böschungsstreifen. Auf manchen Strecken können diese Arbeitszüge nur nachts während betriebsarmer Stunden eingesetzt werden. Das Ermitteln oder Einrichten dieser betriebsarmen Stunden und die Personaleinteilung für die Nachtarbeit erfordern einen Vorlauf von einigen Wochen. Es ist nun ein unangenehmes und teures Unterfangen, wenn ein solcher Arbeitszug wegen feuchten Wetters oder Regen nicht eingesetzt werden kann.

Bei Einsatz der bekannten Vorrichtung im Sommer oder in warmen Ländern, wie Südeuropa, besteht weiter die Gefahr von Gras- und Waldbränden. Beim Befahren von Bahnstrecken mit dem oben erwähnten Arbeitszug oder beim Bearbeiten von großen Flächen mit einer an ein Nutzfahrzeug angeschlossenen Vorrichtung kann die behandelte Fläche kaum und vor allen Dingen nicht über einen längeren Zeitraum nach einer Behandlung beobachtet werden. Es kommt dann vor, daß zwischen den Wildkräutern liegendes trockenes Laub, getrocknete Gräser oder Papier angezündet wird und zu brennen beginnen.

Bekannt sind ein Verfahren und eine Vorrichtung der eingangs genannten Gattung (WO 94/26 102), bei denen heißes Druckwasser mit einer Temperatur zwischen 100°C und 110°C und Überdruck abgegeben wird. In der Praxis haben sich dieses Verfahren und diese Vorrichtung nicht bewährt. Beim Auftreffen des Heißwassers auf der Wildpflanze hat es sich so weit abgekühlt, daß es sie nicht mehr schädigt und damit beseitigt. Bekannt sind weiter eine Vorrichtung und ein Verfahren zum sogenannten Steuern der Vegetation (US-PS 5 366 154), bei denen ein flüssiges Sprühmaterial auf Temperaturen bis zu 115°C erwärmt und mit Drücken von etwa 7 bis 280 kg/cm² abgestrahlt wird. Zu diesem Verfahren wird gesagt, daß es die Verwendung von Chemikalien zum Abtöten von Pflanzen überflüssig macht. Es ist jedoch davon auszugehen, daß sich das sogenannte flüssige Sprühmaterial bis zum Auftreffen auf die Pflanzen so weit abgekühlt hat, daß es ihre biologische Existenz und ihren Wuchs nur in geringem Maße beeinträchtigt. Bekannt ist weiter eine Vorrichtung zur Desinfektion und Sanierung von Böden (FR-PS 1 187 477), bei der Wasser aufgeheizt und als Dampf mit einer Temperatur von mehr als 100°C abgestrahlt wird.

Bekannt ist weiter noch ein mobiles Aggregat zur Unkrautvernichtung (DE 36 39 705 A1). Dieses Aggregat enthält einen fahrbaren Dampferzeuger, der Dampf mit einem Druck von mehr als 10 bar und einer Temperatur von mehr als 180°C erzeugt. Dieses mobile Aggregat soll Unkraut wirksamer vernichten als bei Bestreuen oder Besprühen mit Giftstoffen. Das mobile Aggregat enthält ein Sprühgerät aus einem parabelförmigen Reflektor, in dessen Innenraum ein Sprühkörper aus mehreren Sprühdüsen angeordnet ist. Zu dem mobilen Aggregat gehört auch noch ein Dampferzeuger mit einem Ölvorwärmer, einem Wasserbehälter und Behältern für Öl und Benzin. Sämtliche Teile sind auf einem Pritschenwagen fahrbar angeordnet.

Sämtlichen bekannten Verfahren und Vorrichtungen ist gemeinsam, daß sie Wildkraut und seinen Samen nicht wirksam beseitigen. Dies liegt einfach daran, daß das Heißwasser oder der Heißdampf sich bis zum Auftreffen auf die Wildpflanzen, den Boden und die Samen im Boden so weit abgekühlt hat, daß die biologische Existenz der Pflanzen und ihr Wuchs nicht oder nur in geringem Maße beeinträchtigt werden.

Von diesem Stand der Technik ausgehend, liegt der Erfindung die Aufgabe zugrunde, ein Verfahren der eingangs genannten Gattung so auszubilden, daß das Wildkraut wirksam beseitigt und sein Samen vernichtet wird und Oberflächen gereinigt werden können. Das Verfahren soll sich auch bei feuchtem Wetter und gegebenenfalls auch bei Regen einsetzen lassen. Eine Brandgefahr soll vollständig ausgeschlossen werden. Die Lösung für diese Aufgabe ergibt sich nach der Erfindung mit einem Verfahren, bei dem Heißdampf mit einer solchen Temperatur und einem solchen Druck aus der Düse austritt, daß er mit einer Temperatur von mindestens 140°C und einem Druck von mindestens 60 bar auf das Wildkraut oder die Oberfläche des Bodens auftritt. Die Erfindung liegt damit in der kombinierten Anwendung von Heißwasser/Heißdampf mit Temperaturen von mindestens 140°C und Drücken von mindestens 60 bar. Unter dem eben genannten Boden wird dabei der Erdboden, auf dem das Wildkraut wächst, oder eine zu reinigende Oberfläche verstanden. Bei einem solchen Besprühen der Wildkräuter erwärmt sich deren Oberfläche bis zu dem in den höheren Schichten des Bodens liegenden Vegetationspunkt der Wildkräuter. Durch die Erwärmung wird das Chlorophyll zerstört, und das in den Zellen der Wildkräuter oder Pflanzen enthaltene Eiweiß gerinnt. Die geronnenen Eiweißstoffe wandern in die Wurzeln und schwächen diese. Bei einer Erwärmung der Pflanzenzellen auf Temperaturen von 70° oder mehr hat sich das in den Zellen enthaltene Wasser so weit ausgedehnt, daß die Zellen platzen. Alles dies führt dann zu einem Verwelken der Pflanzen. Dieses Verwelken wird schnell erkannt. Die bei der bekannten Vorrichtung bestehende Gefahr des Verbrennens und einer Energieverschwendung besteht nicht.

Erfindungsgemäß wird darauf geachtet, daß der Vegetationspunkt der Pflanze durch den Heißdampf auf mindestens 70° erwärmt wird. Wie ausgeführt, wird dadurch das Chlorophyll zerstört, und das in den Zellen enthaltene Wasser dehnt sich so weit aus, daß die Zellen platzen. Entscheidend ist, daß der auf den Vegetationspunkt der Pflanze auftreffende Heißdampf sich dort von seiner Temperatur von mindestens 140°C auf etwa 120°C abkühlt und die dabei frei werdende Wärme in die Pflanze eindringt. Dadurch gerinnt das Eiweiß, und das Chlorophyll wird zerstört. Beim Stand der Technik wurden das Heißwasser und/oder der Heißdampf lediglich ungezielt in Richtung auf die Pflanze geblasen.

Zweckmäßig wird der Heißdampf bis in die oberen Schichten der Oberfläche des Bodens gesprüht. Dabei sollte der Heißdampf bis in eine Tiefe von etwa 10 mm in den Boden gesprüht werden. Durch die kombinierte Anwendung des Heißwassers bzw. Heißdampfes mit Temperaturen von mindestens 140°C und Drücken von mindestens 60 bar wird erreicht, daß das Heißwasser bzw. der Heißdampf in die oberen Schichten der Oberfläche des Bodens eindringt. Dabei werden die Blätter und Stiele der Wildkrautpflanzen vollständig mit Heißdampf benetzt. Es hat sich gezeigt, daß das erfindungsgemäße Verfahren sich im Unterschied zu der bisherigen Behandlung der Pflanzen mit Infrarotstrahlung bei niedrigeren Temperaturen anwenden läßt. Dies erklärt sich dadurch, daß der Heißdampf die Pflanzen vollständig umschließt oder benetzt und diese dadurch gleichmäßiger und stärker als durch die Einwirkung der Infrarotstrahlung erwärmt werden. Damit wird auch das Chlorophyll nachhaltiger zerstört, und das Pflanzeneiweiß gerinnt vollständig.

Wasserdampf ist ein besserer Wärmeleiter als Luft. Offensichtlich ist dies ein Grund für die bessere Wirksamkeit des erfindungsgemäßen Verfahrens. Der auf die Pflanzenoberfläche gesprühte Heißdampf bleibt dort gegebenenfalls als Kondensat haften. Die in dem Dampf gespeicherte Wärme dringt dann in die Pflanzen ein, zerstört das Chlorophyll und läßt die Eiweißstoffe gerinnen. Hierfür steht die Zeit bis zum Abkühlen auf etwa 70° zur Verfügung. Luft ist ein weit schlechterer Wärmeleiter. Die bei der Anwendung der bekannten Vorrichtung erwärmte Luft gibt daher ihre Wärme nur langsam an die Pflanzen ab.

Es hat sich gezeigt, daß auch die in den Oberflächenschichten des Bodens befindlichen Samen durch den Heißdampf zerstört werden. Damit können Böden vor einer neuen Aussaat unkrautfrei gemacht werden.

Da das erfindungsgemäße Verfahren im Unterschied zu der bekannten Technik mit Heißdampf und nicht mit Infrarotstrahlung arbeitet, entfällt jede Brandgefahr. Das erfindungsgemäße Verfahren läßt sich damit gefahrlos auch in heißen Sommern und in südlichen Ländern Europas und anderen heißen Ländern anwenden.

Die Erfindung sieht auch eine Vorrichtung zum Durchführen des vorstehend geschilderten Verfahrens vor. Diese Vorrichtung zeichnet sich aus durch einen Vorratsbehälter für Wasser, eine an diesen angeschlossene Druckpumpe, eine Heizeinrichtung zum Aufheizen von Wasser auf eine Temperatur zwischen 90° und 140° , mindestens eine Düse zum Aufsprühen von Heißdampf auf die Oberfläche des Bodens und eine Leitungsanordnung zwischen den vorgenannten Bauteilen.

Zweckmäßig ist die Vorrichtung auf einem Fahrgestell angeordnet. Dabei sollten mehrere Düsen nebeneinander angeordnet, gemeinsam an einer Halterung befestigt und an eine kurze und wärmeisolierte Zuleitung für den Heißdampf angeschlossen sein. Zweckmäßig sind mehrere Düsen nebeneinander an einem Verteilerrechen angeordnet. Bei der Heizeinrichtung handelt es sich zweckmäßig um einen Durchlauferhitzer. Bei Anordnung der erfindungsgemäßen Vorrichtung auf einem Fahrgestell läßt sich dieses an ein kommunales Sprengfahrzeug anhängen. Ebenso läßt sich die Vorrichtung auch an der Fronthydraulik eines Nutzfahrzeuges anbringen. Bei Verwendung von mehreren nebeneinander an einem Verteilerrechen angebrachten Düsen werden diese zweckmäßig von einem elastischen Vorhang umschlossen. Dieser bündelt den Heißdampf auf eine begrenzte Fläche. Dadurch wird die in dem Heißdampf enthaltene Wärme vollständig ausgenutzt.

Am Beispiel der in der Zeichnung gezeigten Ausführungsformen und Anwendungsbeispiele wird die Erfindung nun weiter erläutert. Die Erfindung wird in ihrer Anwendung zum Beseitigen von Wildkraut erläutert. In der Zeichnung ist:
- Fig. 1: eine auseinandergezogene schematische Darstellung der erfindungsgemäßen Vorrichtung,
- Fig. 2: eine Seitenansicht einer an der Fronthydraulik eines kommunalen Sprengfahrzeugs angebrachten erfindungsgemäßen Vorrichtung,
- Fig. 3: eine Seitenansicht einer auf einem Fahrgestell angeordneten und an ein komunales Sprengfahrzeug angehängten erfindungsgemäßen Vorrichtung,
- Fig. 4: in vergrößertem Maßstab eine Vorderansicht eines Verteilerrechens bei Behandlung von bewachsenem Boden,
- Fig. 5: in vergrößertem Maßstab eine Vorderansicht eines Verteilerrechens bei Behandlung von Bodenbelagplatten und
- Fig. 6: in vergrößertem Maßstab eine Vorderansicht eines Verteilerrechens bei Behandlung des Bodens eines teilweise abgeernteten Treibhauses.

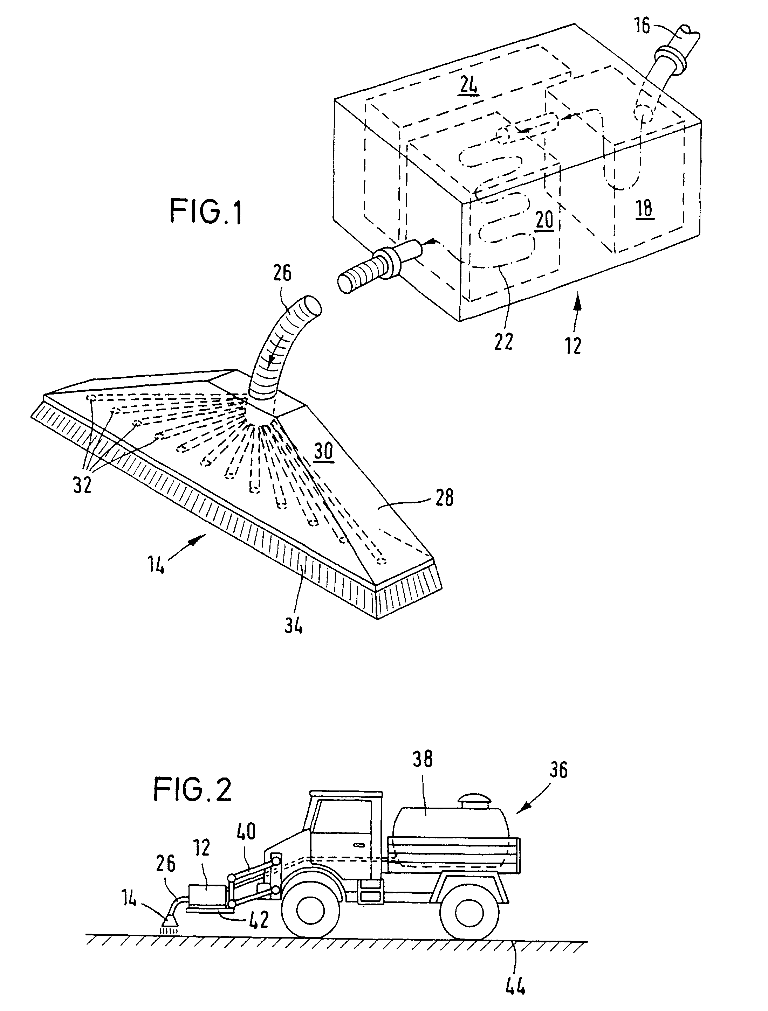

Gemäß der Darstellung in Fig. 1 besteht die erfindungsgemäße Vorrichtung aus einem kastenförmigen Teil 12, auch "hot box" = heißer Kasten genannt, und einem beweglichen Teil 14. Über einen Wasserzulauf 16 läuft Wasser in den kastenförmigen Teil 12 ein. Es durchläuft zuerst eine Druckpumpe 18 und gelangt dann in einen Durchlauferhitzer 20. In diesem ist eine Leitung 22 hin- und hergehend verlegt. Ein Vorrat an Heizmaterial, sei es Öl oder Gas, ist mit 24 bezeichnet. Der Heißdampf verläßt den kastenförmigen Teil 12 über einen Schlauch 26. In Wirklichkeit ist dieser Schlauch 26 besonders kurz und wärmeisoliert. In den Figuren 1 und 2 ist der Schlauch 26 nicht maßstäblich dargestellt. Wie sich aus obigem ableiten läßt, ist der Schlauch 26 kürzer und stärker wärmeisoliert als die Figuren zeigen. Damit wird sichergestellt, daß der Heißdampf sich auf dem Weg vom Durchlauferhitzer 20 bis zum Verlassen der Vorrichtung nicht oder kaum abkühlt und sie mit maximaler Temperatur und maximalem Druck verläßt. Der Schlauch 26 mündet in den beweglichen Teil 14 oder den Verteilerrechen 28. Dieser weist ein Gehäuse 30, in diesem nebeneinander angeordnete und an den Schlauch 26 angeschlossene Düsen 32 und einen Vorhang 34 auf.

Gemäß der Darstellung in Fig. 2 ist der kastenförmige Teil 12 oder die "hot box" am Vorderwagen eines kommunalen Sprengfahrzeuges 36 angeordnet. Dieses weist einen Wasserkessel 38 und eine sogenannte Fronthydraulik 40 auf. Unter dieser wird eine hydraulisch schwenkbare Hebelanordnung verstanden. Diese hebt und senkt eine Hubplatte 42 mit dem auf dieser befestigten kastenförmigen Teil 12 bzw. der "hot box". Vor einem Einsatz wird die Hubplatte 42 soweit abgesenkt, daß sich der bewegliche Teil 14 mit dem Verteilerrechen 28 in einem kurzen Abstand über dem zu behandelnden Boden 44 befindet. Das zum Betreiben der erfindungsgemäßen Vorrichtung benötigte Wasser wird dem Wasserkessel 38 entnommen. Bei Nichtgebrauch ist die Hubplatte 42 angehoben.

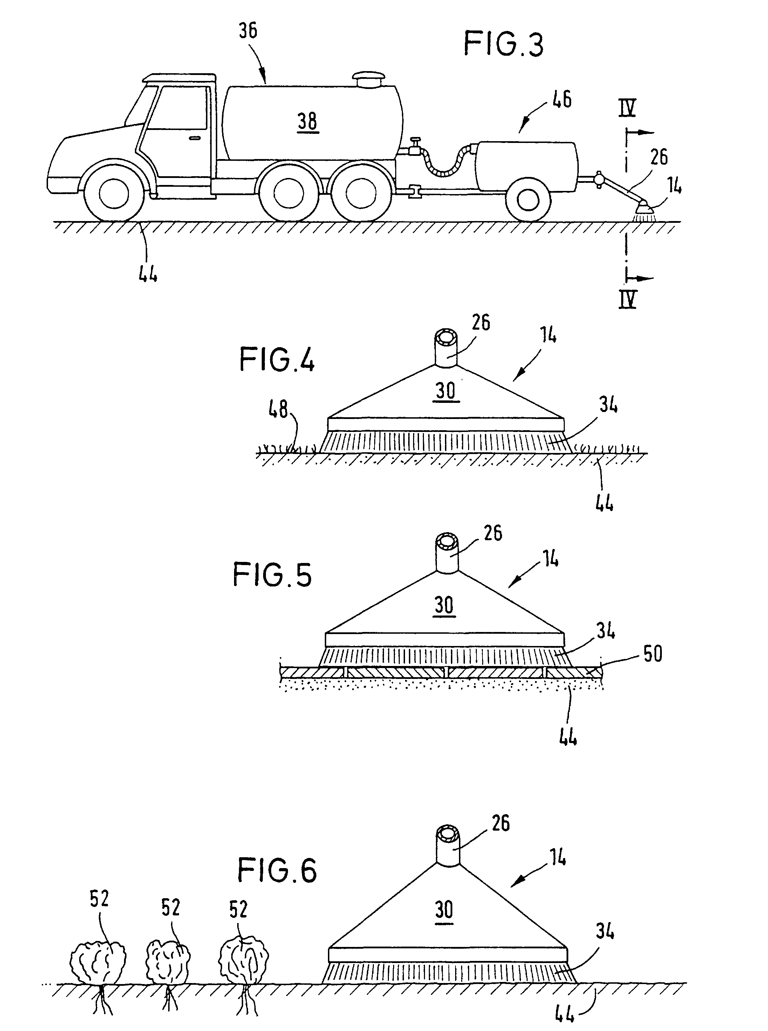

Gemäß der Darstellung in Fig. 3 ist der kastenförmige Teil 12 oder die "hot box" auf einem Anhänger 46 angeordnet, das von einem Sprengfahrzeug 36 gezogen wird. Der bewegliche Teil 14 oder der Verteilerrechen 28 ist mit einem Rohr 26 an den kastenförmigen Teil 12 angeschlossen. Der behandelte Boden ist mit 44 bezeichnet. Fig. 4 zeigt in größerem Maßstab eine Rückansicht des Beweglichen Teils 14 und des Verteilerrechens 28 bei Behandlung von Boden 40. Fig. 4 zeigt in größerem Maßstab den Verteilerrechen 28 bei Behandlung des Bodens 44. Fig. 5 zeigt in größerem Maßstab das bewegliche Teil 14 mit dem Verteilerrechen 28 bei Behandlung von Bodenbelagplatten 50. Fig. 6 zeigt in größerem Maßstab das bewegliche Teil 14 mit dem Verteilerrechen 28 bei Behandlung des Bodens 44 eines Treibhauses. Fig. 6 zeigt auch noch einige außerhalb des behandelten Gebietes des Bodens 44 stehende Pflanzen 52 (Salatköpfe).

Im Betrieb der erfindungsgemäßen Vorrichtung wird das über den Wasserzulauf 16 eintretende Wasser von der Druckpumpe 18 durch den Durchlauferhitzer 20 mit der wendelförmig verlaufenden Leitung 22 gedrückt, in diesem auf eine Temperatur zwischen 90° und 140° erwärmt und dann als Heißdampf über den Schlauch 26 in die einzelnen Düsen 32 gedrückt. Diese werden über die zu behandelnde Fläche geführt. Der Heißdampf tritt aus den Düsen 32 aus und wird auf die zu behandelnden Pflanzen, einen Boden oder Bodenbelagplatten gesprüht. Der Vorhang 34 verhindert ein nutzloses Abströmen von Heißdampf.

Die Figuren 2 und 3 zeigen Anwendungsbeispiele zum Behandeln von Straßen, Parkanlagen, Laufbahnen in Stadien, Friedhofswegen und dergleichen.

Fig. 4 zeigt im einzelnen, wie das bewegliche Teil 14 mit dem Verteilerrechen über einen mit Wildkräutern bewachsenen Boden 44 geführt wird. Fig. 5 zeigt die Behandlung von Bodenbelagplatten 50. Moose, Flechten und Algen, die in den Oberflächenporen und Rissen von und in den Fugen zwischen den Bodenbelagplatten 50 sitzen, werden vernichtet. Fig. 6 zeigt die Behandlung des abgeernteten Teiles des Bodens 44 eines Treibhauses oder einer anderen Kulturfläche. Nach dem Abernten von zum Beispiel Salatköpfen 52, Kohl oder einem anderen Gemüse wird der Boden 44 mit der erfindungsgemäßen Vorrichtung behandelt. In dem Boden befindliche Samen, Wurzelreste und Sämlinge werden vernichtet. Diese Behandlung, eine Art Jäten, läßt sich schneller und kostengünstiger als mit der Hand durchführen. Weiter ist es schonender als eine Behandlung mit Herbiziden. Mit der erfindungsgemäßen Vorrichtung können auch Kunststofflaufbahnen, allgemein Sportanlagen usw. behandelt und Moose, Algen und allgemein Bewuchs schnell, sicher und ohne schädliche Nebenwirkungen beseitigt werden. Mit der Erfindung können auch schnell und sicher Graffiti, Ölspuren und Kaugummi von Oberflächen jeglicher Art entfernt und diese damit gereinigt werden.

## Patentansprüche

1. Verfahren zum Beseitigen von Wildkraut und Vernichten seiner Samen und zum Reinigen von Oberflächen mit Besprühen des Wildkrautes und der Oberfläche des von ihm bewachsenen Bodens mit aus mindestens einer Düse mit einer Temperatur von mindestens 140°C und einem Druck von mindestens 60 bar austretendem Heißwasser und/oder Heißdampf wobei der Heißdampf mit einer solchen Temperatur und einem solchen Druck aus der Düse austritt, daß er mit einer Temperatur von mindestens 140°C und einem Druck von mindestens 60 bar auf das Wildkraut oder die Oberfläche des Bodens auftrifft.

2. Verfahren nach Anspruch 1, **dadurch gekennzeichnet, daß** der Vegetationspunkt der Pflanze durch den auftreffenden Heißdampf auf mindestens 70°C erwärmt wird.

3. Verfahren nach Anspruch 1 oder 2, **dadurch gekennzeichnet, daß** der Heißdampf bis in die oberen Schichten der Oberfläche des Bodens gesprüht wird.

4. Verfahren nach Anspruch 1 oder 2, **dadurch gekennzeichnet, daß** der Heißdampf bis in eine Tiefe von 10 mm in den Boden gesprüht wird.

5. Verfahren nach einem der Ansprüche 1 bis 4, **dadurch gekennzeichnet, daß** Blätter und Stiele der Wildkrautpflanzen vollständig mit Heißdampf benetzt werden.

6. Vorrichtung zum Durchführen des Verfahrens nach einem oder mehreren der Ansprüche 1 bis 5 mit einem Vorratsbehälter für Wasser, mit einer an diesen angeschlossenen Druckpumpe (18), mit einer Heizeinrichtung (20) zum Aufheizen von Wasser auf eine Temperatur über 140°C, mit mindestens einer Düse (32) zum Aufsprühen von Heißdampf auf die Oberfläche des Bodens (44) und mit einer Leitungsanordnung (16, 26) zwischen den vorgenannten Bauteilen.

7. Vorrichtung nach Anspruch 6, **dadurch gekennzeichnet, daß** sie auf einem Anhänger (46) angeordnet ist.

8. Vorrichtung nach Anspruch 6, **dadurch gekennzeichnet, daß** mehrere Düsen (32) nebeneinander angeordnet, gemeinsam an einer Halterung befestigt und an eine kurze, wärmeisolierte Zuleitung (26) für Heißdampf angeschlossen sind.

9. Vorrichtung nach Anspruch 8, **dadurch gekennzeichnet, daß** mehrere Düsen (32) nebeneinander an einem Verteilerrechen (28) angeordnet sind.

10. Vorrichtung nach Anspruch 6, **dadurch gekennzeichnet, daß** die Heizeinrichtung (20) ein Durchlauferhitzer ist.

11. Vorrichtung nach einem oder mehreren der Ansprüche 6 bis 10, **dadurch gekennzeichnet, daß** sie an ein kommunales Sprengfahrzeug (36) angehängt ist.

12. Vorrichtung nach Anspruch 6 und 8 bis 11, **dadurch gekennzeichnet, daß** sie an der Fronthydraulik (40) eines Nutzfahrzeuges angebracht ist.

13. Vorrichtung nach Anspruch 8, **dadurch gekennzeichnet, daß** am Verteilerrechen (28) ein die Düsen (32) umschließender elastischer Vorhang (34) angebracht ist.

## Claims

1. A method of clearing weeds and exterminating seeds thereof and cleaning surfaces by spraying the weeds and the surface of the ground covered thereby with superheated steam and/or hot water issuing from at least one nozzle at a temperature of at least 140°C and under a pressure of at least 60 bars, wherein the superheated steam issues from the nozzle at such a temperature and under such a pressure that it strikes against the weeds or the surface of the ground at a temperature of at least 140°C and under a pressure of at least 60 bars.

2. A method according to claim 1 **characterised in that** the vegetation point of the plant is heated to at least 70°C by the superheated steam hitting same.

3. A method according to claim 1 or claim 2 **characterised in that** the superheated steam is sprayed into the upper layers of the surface of the ground.

4. A method according to claim 1 or claim 2 **characterised in that** the superheated steam is sprayed into the ground to a depth of 10 mm.

5. A method according to one of claims 1 to 4 **characterised in that** leaves and stalks of the weed plants are completely wetted with superheated steam.

6. Apparatus for carrying out the method according to one or more of claims 1 to 5 comprising a storage container for water, a pressure pump (18) connected thereto, a heating device (20) for heating water to a temperature of over 140°C, at least one nozzle (32) for spraying superheated steam on to the surface of the ground (44), and a conduit arrangement (16, 26) between the above-stated components.

7. Apparatus according to claim 6 **characterised in that** it is arranged on a trailer (46).

8. Apparatus according to claim 6 **characterised in that** a plurality of nozzles (32) are arranged in mutually juxtaposed relationship, are fixed jointly to a holder and are connected to a short, heat-insulated feed conduit (26) for superheated steam.

9. Apparatus according to claim 8 **characterised in that** a plurality of nozzles (32) are arranged in mutually juxtaposed relationship on a distributor rake (28).

10. Apparatus according to claim 6 **characterised in that** the heating device (20) is a continuous flow heater.

11. Apparatus according to one or more of claims 6 to 10 **characterised in that** it is suspended on a municipal sprinkler vehicle (36).

12. Apparatus according to claim 6 and claims 8 to 11 **characterised in that** it is mounted to the front hydraulic system (40) of a goods vehicle.

13. Apparatus according to claim 8 **characterised in that** mounted to the distributor rake (28) is an elastic curtain (34) enclosing the nozzles (32).

## Revendications

1. Procédé destiné à éliminer les herbes sauvages et à extirper ses graines et à nettoyer des surfaces en aspergeant les herbes sauvages et la surface du sol recouvert de celles-ci avec de l'eau chaude et/ou de la vapeur surchaufée sortant d'au moins une tuyère avec une température d'au moins 140°C et avec une pression d'au moins 60 bars, ladite vapeur surchaufée sortant avec une telle température et avec une telle pression de ladite tuyère qu'elle rencontre les herbes sauvages ou la surface du sol avec une température d'au moins 140°C et avec une pression d'au moins 60 bars.

2. Procédé selon la revendication 1, **caractérisé par le fait que** le point de végétation de la plante est chauffé à au moins 70°C par la vapeur surchaufée qui la rencontre.

3. Procédé selon la revendication 1 ou 2, **caractérisé par le fait que** la vapeur surchauffée est projetée jusque dans les couches supérieures de la surface du sol.

4. Procédé selon la revendication 1 ou 2, **caractérisé par le fait que** la vapeur surchauffée est projetée jusque dans une profondeur de 10 mm dans le sol.

5. Procédé selon l'une des revendications 1 à 4, **caractérisé par le fait que** les feuilles et les tiges des plantes de l'herbe sauvage sont mouillées complètement de vapeur surchauffée,

6. Dispositif pour la mise en oeuvre du procédé selon l'une ou plusieurs des revendications 1 à 5, avec un réservoir pour l'eau, avec une pompe refoulante (18) connectée à celui-ci, avec un dispositif de chauffage (20) destiné à chauffer de l'eau à une température supérieure à 140°C, avec au moins une tuyère (32) destinée à projeter de la vapeur surchauffée sur la surface du sol (44) et avec une disposition de conduite (16, 26) entre les composants susmentionnés.

7. Dispositif selon la revendication 6, **caractérisé par le fait qu'**il est disposé sur une remorque (46).

8. Dispositif selon la revendication 6, **caractérisé par le fait que** plusieurs tuyères (32) sont disposées l'une à côté de l'autre, sont fixées ensemble sur un dispositif de fixation et sont connectées à une courte conduite d'amenée calorifugée (26) pour la vapeur surchauffée.

9. Dispositif selon la revendication 8, **caractérisé par le fait que** plusieurs tuyères (32) sont disposées l'une à côté de l'autre sur un râteau distributeur (28).

10. Dispositif selon la revendication 6, **caractérisé par le fait que** le dispositif de chauffage (20) est un chauffe-eau instantané.

11. Dispositif selon l'une ou plusieurs des revendications 6 à 10, **caractérisé par le fait qu'**il est attelé à une arroseuse automobile communale (36).

12. Dispositif selon les revendications 6 et 8 à 11, **caractérisé par le fait qu'**il est monté sur l'hydraulique frontale (40) d'un véhicule utilitaire.

13. Dispositif selon la revendication 8, **caractérisé par le fait qu'**un rideau élastique (34) entourant les tuyères (32) est disposé sur ledit râteau distributeur (28).
